# EUROPEAN PATENT SPECIFICATION

(11) **EP 2 106 010 B1**
(45) Date of publication and mention of the grant of the patent: **07.09.2011**
(21) Application number: 08425207.1
(22) Date of filing: 28.03.2008
(51) Int. Cl.: H02J 9/06

(54) **Power plant and method for controlling said plant**
Kraftwerk und Verfahren zur Steuerung des Kraftwerkes
Installation électrique et procédé de commande de ladite installation

(43) Date of publication of application: 30.09.2009
(73) Proprietor: ANSALDO ENERGIA S.P.A., 16152 Genova (IT)
(72) Inventor: Gruppi, Pietro, 16146 Genova (IT); Costa, Alberto, 16156 Genova (IT); Florio, Andrea, 15057 Tortona (IT); Costa, Giancarlo, 16141 Genova (IT)
(74) Representative: Bergadano, Mirko

(56) References cited:
- US-A- 6 134 124
- US-A1- 2005 200 133
- US-B1- 6 806 589

## Description

The present invention relates to a plant for the production of electrical energy and a method for controlling said plant.

Known to the art are plants for the production of electrical energy provided with: a main plant, comprising at least one main generation unit for producing electrical energy at a first frequency for an electrical distribution network connected to the plant; and a complementary plant, comprising at least one internal-combustion-engine unit for producing electrical energy at the first frequency for the electrical distribution network.

Plants of this type are particularly useful in the transient situations in which a fast and significant variation of the energy produced by the plant is required to counterbalance a variation of the frequency of the electrical distribution network.

However, plants of this type suffer from certain drawbacks.

In particular, the complementary plant is forced to produce energy at the same frequency as that of the energy produced by the main plant. This prevents the internal-combustion-engine unit of the complementary plant from operating at variable r.p.m. with evident disadvantages from the standpoint of efficiency of the internal-combustion-engine unit.

Examples of this kind of plant are disclosed in documents US61314124. and US2005/200133.

An aim of the present invention is to provide a plant for the production of electrical energy that is free from the drawbacks presented by the known art. In accordance with said purposes the present invention relates to a plant for the production of electrical energy according to claim 1 :

A further aim of the present invention is to provide a method for controlling a plant for the production of electrical energy that is efficient and reliable. In accordance with said purposes, the present invention relates to a method for controlling a plant for the production of electrical energy according to claim 15.

Further characteristics and advantages of the present invention will emerge clearly from the ensuing description of a non-limiting example of embodiment thereof, with reference to the annexed figure, which is a schematic representation of the plant for the production of electrical energy according to the present invention.

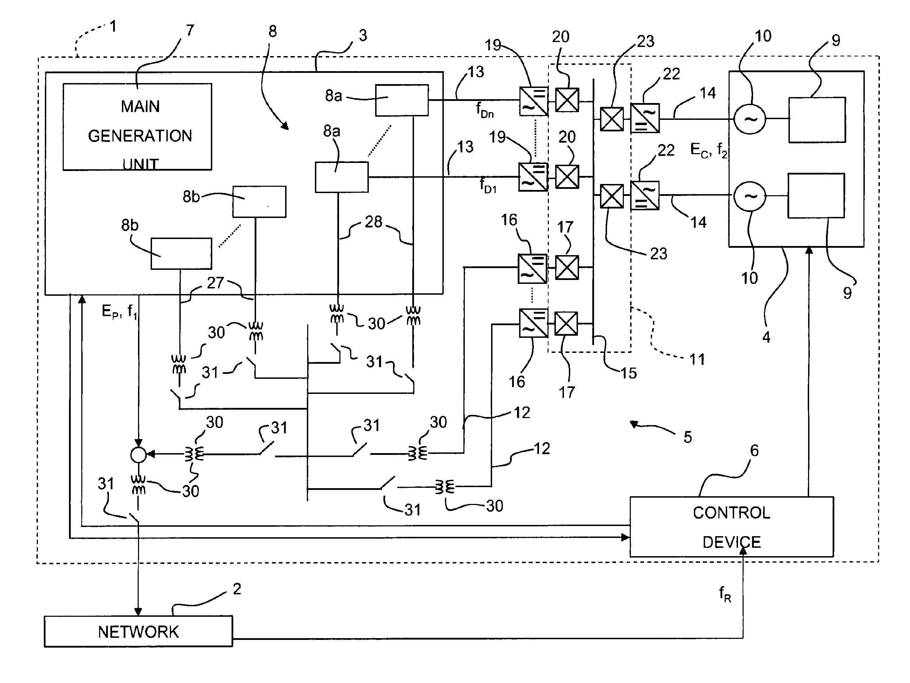

In Figure 1 designated by the reference number 1 is a plant for the production of electrical energy connected to an electrical distribution network 2.

The plant 1 comprises a main plant 3, a complementary plant 4, a connection circuit 5 and a control device 6.

The main plant 3 comprises at least one main generation unit 7 designed to produce primary electrical energy E_{P} at a first frequency f₁ for supplying the electrical distribution network 2. The main generation unit 7 is coupled to an electric generator (not illustrated for simplicity in the attached figure) and can be supplied with gas and/or diesel oil, or else coal, according to the type of main plant 3 used.

The main plant 3 can be, in fact, a plant of the single-cycle gas-turbine type, comprising at least one gas turbine supplied with gas and/or diesel oil, a plant of the combined-cycle gas-turbine type, comprising at least one gas turbine supplied with gas and/or diesel oil, a steam turbine and a recovery boiler, or else a plant of a conventional type, comprising a boiler supplied with coal or diesel oil and a steam turbine.

The main plant 3 comprises a plurality of auxiliary devices 8 (pumps, valves, etc.), which are supplied electrically and are designed to assist the main generation unit 7 during operation. In particular, the auxiliary devices 8 are divided into variable-frequency auxiliary devices 8a and fixed-frequency auxiliary devices 8b. The variable-frequency auxiliary devices 8a are devices that can operate at variable r.p.m., such as, for example, pumps, compressors, fans, etc.

The fixed-frequency auxiliary devices 8b are devices that are not able to operate at a variable frequency, such as, for example, valves, sensors, lighting devices, etc.

The complementary plant 4 comprises at least one internal-combustion-engine unit 9 coupled to an electric generator 10 for producing complementary electrical energy E_{C} at a second variable frequency f₂.

In the non-limiting example of the attached figure, the complementary plant 4 comprises two internal-combustion-engine units 9 coupled to two respective electric generators 10.

The complementary electrical energy E_{C} at the second frequency f₂ produced by the complementary plant 4 is supplied to the electrical distribution network 2 and/or to the auxiliary devices 8 by means of the circuit 5.

In particular, the internal-combustion-engine unit 9 can be a diesel-cycle reciprocating engine supplied with biodiesel fuel or with diesel oil, or else a combustion engine, or else a turbine.

The circuit 5 connects the complementary plant 4 to the main plant 3 and to the electrical distribution network 2 and comprises a DC portion 11, a plurality of main branches 12 in communication with the electrical distribution network 2, a plurality of main branches 13 in communication with respective variable-frequency auxiliary devices 8a, and two complementary branches 14 in communication with the complementary plant 4.

The DC portion 11 comprises a DC busbar 15, which is connected to the main branches 12, to the main branches 13, and to the complementary branches 14.

In particular, set along each main branch 12 are a DC/AC converter 16 and a main static switch 17. In particular, the main static switch 17 is set between the DC/AC converter 16 and the DC busbar 15. The DC/AC converter 16 carries out conversion of the complementary electrical energy E_{C} of the DC current that traverses it into complementary electrical energy E_{C} at the frequency f₁.

Set along each main branch 13 are a DC/AC converter 19 and a main static switch 20. In particular, the main static switch 20 is set between the DC/AC converter 19 and the DC busbar 15. The DC/AC converter 19 carries out conversion of the complementary electrical energy E_{C} of the DC current that traverses it into electrical energy at a given frequency f_{D1}... f_{Dn}, at which the respective variable-frequency auxiliary device 8a operates in an optimal way.

Set along each complementary branch 14 are an AC/DC converter 22 and a complementary static switch 23. In particular, the complementary static switch 23 is set between the AC/DC converter 22 and the DC busbar 15.

The circuit 5 further comprises an AC busbar 25 along the main branch 12, which is set between the DC/AC converter 16 and the electrical distribution network 2 and is connected, by means of AC supply branches 27, to the respective fixed-frequency auxiliary devices 8b and, preferably, by means of by-pass branches 28, to the respective variable-frequency auxiliary devices 8a. The by-pass branches 28 are optional and provide for supply of the variable-frequency auxiliary devices 8a in the exceptional cases in which supply of the variable-frequency auxiliary devices 8a by means of the main branches 13 is prevented.

The circuit 5 further comprises a plurality of transformers 30 and a plurality of switches 31.

Both the transformers 30 and the switches 31 are set along the AC-current portions of the main branches 12, along the AC supply branches 27 and along the by-pass branches 28.

The control device 6 executes a control procedure aimed at adjusting the amount of energy emitted by the plant 1 on the basis of the difference between a network frequency f_{R} detected and a rated frequency f_{N}, generally pre-defined and equal to 50 or 60 Hz according to the type of network to which the plant 1 is connected.

In particular, the control procedure comprises the following steps:
producing primary electrical energy E_{P} at the first frequency f₁ for the electrical distribution network 2 connected to the plant 1;
producing complementary electrical energy E_{C} at the second variable frequency f₂;
converting the complementary electrical energy E_{C} at the second frequency f₂ into complementary electrical energy E_{C} at the first frequency f₁; and
supplying a controlled fraction of complementary electrical energy E_{C} at the first frequency f₁ to the electrical distribution network 2 if the network frequency f_{R} is different from a rated frequency f_{N}; the controlled fraction of complementary electrical energy E_{C} being determined on the basis of the difference between the network frequency f_{R} and the rated frequency f_{N}.

In particular, the step of producing primary electrical energy E_{P} envisages maintaining the primary electrical energy E_{P} constant in a first operating mode and varying the primary electrical energy E_{P} in a second operating mode.

In the first operating mode, the step of supplying a controlled fraction of complementary electrical energy E_{C} substantially envisages:
supplying a rated fraction of complementary electrical energy E_{C} if the network frequency f_{R} is equal to the rated frequency f_{N};
increasing the fraction of complementary electrical energy E_{C} with respect to the rated fraction of complementary electrical energy E_{C} if the network frequency f_{R} is lower than the rated frequency f_{N}; and
reducing the fraction of complementary electrical energy E_{C} with respect to the rated fraction of complementary electrical energy E_{C} if the network frequency f_{R} is higher than the rated frequency f_{N}.

In the second operating mode, the step of producing controlled primary electrical energy E_{P} envisages varying the primary electrical energy E_{P} between a pre-set minimum value and a pre-set maximum value according to the difference between the network frequency f_{R} and the rated frequency f_{N}, whilst the step of supplying a controlled fraction of complementary electrical energy E_{C} substantially envisages:
supplying a rated fraction of complementary electrical energy E_{C} if the primary electrical energy E_{P} is comprised in a pre-set range defined by a first limit, lower than the maximum pre-set value, and by a second limit, higher than the minimum pre-set value;
increasing the fraction of complementary electrical energy E_{C} with respect to the rated fraction of complementary electrical energy E_{C}, if the primary electrical energy E_{P} is equal to or higher than the first limit and if the network frequency f_{R} is lower than the rated frequency f_{N}; and
reducing the fraction of complementary electrical energy E_{C} with respect to the rated fraction of complementary electrical energy E_{C}, if the primary electrical energy E_{P} is equal to or lower than the second limit and if the network frequency f_{R} is higher than the rated frequency f_{N}.

The control device 6 is moreover configured for managing the plurality of switches 31, set along the main branches 17 and 20, along the supply branches 27, and along the by-pass branches 28.

In use, the complementary plant 4 is preferably always active and produces complementary energy E_{C} at the second variable frequency f₂, which, according to the configuration assumed by the main static switches 17 and 20 and by the switches 31, can be distributed in part to the variable-frequency auxiliary devices 8a, and/or in part to the electrical distribution network 2, and/or in part to the fixed-frequency auxiliary devices 8b.

The complementary plant 4 can advantageously be used also in the steps of starting of the plant 1 in situations of unavailability of the electrical distribution network 2. During said steps, in fact, the complementary energy E_{C} produced by the complementary plant 4 can be used for supplying the auxiliary devices 8 of the main plant 3.

Finally, it is evident that modifications and variations can be made to the plant and to the method described herein, without thereby departing from the scope of the annexed claims.

## Claims

1. A plant for the production of electrical energy comprising:
- a main plant (3) comprising at least one main generation unit (7) for producing primary electrical energy (E_{P}) at a first frequency (f₁) for an electrical distribution network (2) connected to the plant (1); and
- a complementary plant (4), comprising at least one internal-combustion-engine unit (9) for producing complementary electrical energy (E_{C}) at a second variable frequency (f₂) ;
- a circuit (5) connected to the complementary plant (4), for converting the complementary electrical energy (E_{C}) at the second frequency (f₂) into complementary electrical energy (E_{C}) at the first frequency (f₁) and supplying the complementary electrical energy (E_{C}) at the first frequency (f₁) to the electrical distribution network (2);
the plant being **characterized in that** it comprises a control device (6) configured to:
- maintain the primary electrical energy (E_{P}) constant in a first operating mode and varying the primary electrical energy (E_{P}) in a second operating mode between a pre-set minimum value and a pre-set maximum value according to the difference between the network frequency (f_{R}) and a rated frequency of the network (f_{N}) ;
- supply a controlled fraction of complementary electrical energy (E_{C}) at the first frequency (f₁) to the electrical distribution network (2), if the network frequency (f_{R}) is different from the rated frequency (f_{N}); the controlled fraction of complementary electrical energy (E_{C}) being determined on the basis of the difference between the network frequency (f_{R}) and the rated frequency (f_{N}); wherein supplying a controlled fraction of complementary electrical energy (E_{C}) comprises:
• supplying a rated fraction of complementary electrical energy (E_{C}) if the primary electrical energy (E_{P}) is comprised in a pre-set range defined by a first limit, lower than the maximum pre-set value, and by a second limit, higher than the minimum pre-set value;
• increasing the fraction of complementary electrical energy (E_{C}) with respect to the rated fraction of complementary electrical energy (E_{C}), if the primary electrical energy (E_{P}) is equal to or higher than the first limit and if the network frequency (f_{R}) is lower than the rated frequency (f_{N}); and
• reducing the fraction of complementary electrical energy (E_{C}) with respect to the rated fraction of complementary electrical energy (E_{C}), if the primary electrical energy (E_{P}) is equal to or lower than the second limit and if the network frequency (f_{R}) is higher than the rated frequency (f_{N}).

2. The plant according to Claim 1, **characterized in that** the main plant (3) comprises a plurality of auxiliary devices (8a; 8b) for assisting the production of primary electrical energy (E_{P}) at the first frequency (f₁); the circuit (5) being connected to at least one of the auxiliary devices (8) of the main plant (3).

3. The plant according to either Claim 1 or Claim 2, **characterized in that** the circuit (5) comprises a DC portion (11).

4. The plant according to Claim 3, **characterized in that** the DC portion (11) comprises a DC busbar (15), which is connected to at least one first main branch (12) in communication with the electrical distribution network (2) and set along which is a first DC/AC converter (16) and to at least one first complementary branch (14) in communication with the complementary plant (4) and set along which is a first AC/DC converter (22).

5. The plant according to Claim 4, **characterized in that** the circuit (5) comprises a first main static switch (17) set along the first main branch (12) between the first DC/AC converter (16) and the DC busbar (15).

6. The plant according to Claim 4 or Claim 5, **characterized in that** the circuit (5) comprises a first complementary static switch (23) set along the first complementary branch (14) between the first AC/DC converter (22) and the DC busbar (15).

7. The plant according to any one of Claims 2 to 6, **characterized in that** the plurality of auxiliary devices (8a; 8b) comprises auxiliary devices that can operate at a fixed frequency (8a) and auxiliary devices that can operate at a variable frequency (8b).

8. The plant according to Claim 7, **characterized in that** the DC busbar (15) is connected to at least one second main branch (13) in communication with a respective variable-frequency auxiliary device (8a) of the main plant (3) and set along which is a second DC/AC converter (19).

9. The plant according to Claim 8, **characterized in that** the circuit (5) comprises at least one second main static switch (20) set along the respective second main branch (13) between the second DC/AC converter and the DC busbar (15).

10. The plant according to any one of Claims 4 to 9, **characterized in that** the DC busbar (15) is connected to at least one second complementary branch (14) in communication with the complementary plant (4) and set along which is a second AC/DC converter (22).

11. The plant according to Claim 10, **characterized in that** the circuit (5) comprises at least one second complementary static switch (23) set along the respective second complementary branch (13) between the second AC/DC converter (22) and the DC busbar (15).

12. The plant according to any one of Claims 7 to 11, **characterized in that** the circuit (5) comprises an AC busbar (25) along the first main branch (12), which is set between the DC/AC converter (16) and the electrical distribution network (2).

13. The plant according to Claim 12, **characterized in that** the AC busbar (25) is connected to at least one respective auxiliary device at a fixed frequency (8b).

14. The plant according to Claim 12 or Claim 13, **characterized in that** the AC busbar (25) is connected to at least one variable-frequency auxiliary device (8b) connected to the DC busbar (15).

15. A method for controlling a plant (1) for the production of electrical energy;
the method comprising the steps of:
- producing primary electrical energy (E_{P}) at a first frequency (f₁) for an electrical distribution network (2) connected to the plant (1);
- producing complementary electrical energy (E_{C}) at a second variable frequency (f₂);
- detecting a network frequency (f_{R}) of the electrical distribution network (2);
- converting the complementary electrical energy (E_{C}) at the second frequency (f₂) into complementary electrical energy (E_{C}) at the first frequency (f₁);
- supplying a controlled fraction of complementary electrical energy (E_{C}) at the first frequency (f₁) to the electrical distribution network (2), if the network frequency (f_{R}) is different from a rated frequency (f_{N}); the step of supplying a controlled fraction of complementary electrical energy (E_{C}) comprises the step of determining the controlled fraction of complementary electrical energy (E_{C}) on the basis of the difference between the network frequency (f_{R}) and the rated frequency (f_{N}) ;
the method being **characterized in that**:
- the step of producing primary electrical energy (Ep) comprises maintaining the primary electrical energy (E_{P}) constant in a first operating mode and varying the primary electrical energy (E_{P}) in a second operating mode; the step of varying the primary electrical energy (E_{P}) comprises the step of varying the primary electrical energy (E_{P}) between a pre-set minimum value and a pre-set maximum value according to the difference between the network frequency (f_{R}) and the rated frequency (f_{N}) ;
- the step of supplying a controlled fraction of complementary electrical energy (E_{C}) comprises:
• supplying a rated fraction of complementary electrical energy (E_{C}) if the primary electrical energy (E_{P}) is comprised in a pre-set range defined by a first limit, lower than the maximum pre-set value, and by a second limit, higher than the minimum pre-set value;
• increasing the fraction of complementary electrical energy (E_{C}) with respect to the rated fraction of complementary electrical energy (E_{C}), if the primary electrical energy (E_{P}) is equal to or higher than the first limit and if the network frequency (f_{R}) is lower than the rated frequency (f_{N}) ; and
• reducing the fraction of complementary electrical energy (E_{C}) with respect to the rated fraction of complementary electrical energy (E_{C}), if the primary electrical energy (E_{P}) is equal to or lower than the second limit and if the network frequency (f_{R}) is higher than the rated frequency (f_{N}).

16. The method according to Claim 1, wherein the internal-combustion-engine unit (10) is supplied with biodiesel fuel.

## Patentansprüche

1. Anlage zur Erzeugung von elektrischer Energie, umfassend:
- eine Hauptanlage (3), die zumindest eine Haupterzeugungseinheit (7) zur Erzeugung von primärer elektrischer Energie (E_{P}) bei einer ersten Frequenz (f₁) für ein mit der Anlage (1) verbundenes elektrisches Verteilungsnetz (2) umfasst; und
- eine komplementäre Anlage (4), die zumindest eine Verbrennungskraftmaschineneinheit (9) zum Erzeugen von komplementärer elektrischer Energie (E_{C}) bei einer zweiten variablen Frequenz (f₂) erzeugt;
- eine Schaltung (5), die mit der komplementären Anlage (4) verbunden ist, zum Umwandeln der komplementären elektrischen Energie (E_{C}) bei der zweiten Frequenz (f₂) in komplementäre elektrische Energie (E_{C}) bei der ersten Frequenz (f₁) und zum Zuführen der komplementären elektrischen Energie (E_{C}) bei der ersten Frequenz (f₁) zu dem elektrischen Verteilungsnetz (2);
wobei die Anlage **dadurch gekennzeichnet ist, dass** sie eine Steuervorrichtung (6) umfasst, die konfiguriert ist, um:
- die primäre elektrische Energie (E_{P}) in einem ersten Betriebsmodus konstant zu halten und die primäre elektrische Energie (E_{P}) in einem zweiten Betriebsmodus zu variieren, zwischen einem voreingestellten Minimalwert und einem voreingestellten Maximalwert entsprechend der Differenz zwischen der Netzfrequenz (f_{R}) und einer Nennfrequenz (f_{N});
- einen kontrollierten Anteil an komplementärer elektrischer Energie (E_{C}) bei der ersten Frequenz (f₁) dem elektrischen Verteilungsnetz (2) zuzuführen, wenn sich die Netzfrequenz (f_{R}) von der Nennfrequenz (f_{N}) unterscheidet; wobei der kontrollierte Anteil an komplementärer elektrischer Energie (E_{C}) auf der Basis der Differenz zwischen der Netzfrequenz (f_{R}) und der Nennfrequenz (f_{N}) bestimmt wird; wobei das Zuführen eines kontrollierten Anteils an komplementärer elektrischer Energie (E_{C}) umfasst:
• Zuführen eines Nennanteils an komplementärer elektrischer Energie (E_{C}), wenn sich die primäre elektrische Energie (E_{P}) in einem voreingestellten Bereich befindet, der durch einen ersten Grenzwert, der niedriger ist als der maximale voreingestellte Wert, und durch einen zweiten Grenzwert, der höher ist als der minimale voreingestellte Wert, festgelegt ist;
• Vergrößern des Anteils an komplementärer elektrischer Energie (E_{C}) in Bezug auf den Nennanteil an komplementärer elektrischer Energie (E_{C}), wenn die primäre elektrische Energie (E_{P}) gleich oder höher als der erste Grenzwert ist und wenn die Netzfrequenz (f_{R}) niedriger als die Nennfrequenz (f_{N}) ist; und
• Verkleinern des Anteils an komplementärer elektrischer Energie (E_{C}) in Bezug auf den Nennanteil an komplementärer elektrischer Energie (E_{C}), wenn die primäre elektrische Energie (E_{P}) gleich oder niedriger als der zweite Grenzwert ist und wenn die Netzfrequenz (f_{R}) höher als die Nennfrequenz (f_{N}) ist.

2. Anlage nach Anspruch 1, **dadurch gekennzeichnet, dass** die Hauptanlage (3) eine Vielzahl von Hilfseinrichtungen (8a; 8b) umfasst, um die Erzeugung von primärer elektrischer Energie (E_{P}) bei der ersten Frequenz (f₁) zu unterstützen; wobei die Schaltung (5) mit zumindest einer der Hilfsvorrichtungen (8) der Hauptanlage (3) verbunden ist.

3. Anlage nach Anspruch 1 oder 2, **dadurch gekennzeichnet, dass** die Schaltung (5) einen DC-Anteil (11) umfasst.

4. Anlage nach Anspruch 3, **dadurch gekennzeichnet, dass** der DC-Anteil (11) eine DC-Busschiene (15) umfasst, die mit zumindest einem ersten Hauptzweig (12) in Verbindung mit dem elektrischen Verteilungsnetz (2) verbunden ist und entlang dem ein erster DC-AC-Wandler (16) angeordnet ist, und mit zumindest einem ersten komplementären Zweig (14) in Verbindung mit der komplementären Anlage (4), entlang dem ein erster AC-DC-Wandler (22) angeordnet ist.

5. Anlage nach Anspruch 4, **dadurch gekennzeichnet, dass** die Schaltung (5) einen ersten statischen Hauptschalter (17) umfasst, der entlang des ersten Hauptzweiges (12) zwischen dem ersten DC-AC-Wandler (16) und der DC-Busschiene (15) angeordnet ist.

6. Anlage nach Anspruch 4 oder 5, **dadurch gekennzeichnet, dass** die Schaltung (5) einen ersten komplementären statischen Schalter (23) umfasst, der entlang des ersten komplementären Zweiges (14) zwischen dem ersten AC-DC-Wandler (22) und der DC-Busschiene (15) angeordnet ist.

7. Anlage nach einem der Ansprüche 2 bis 6, **dadurch gekennzeichnet, dass** die Anzahl von Hilfsvorrichtungen (8a; 8b) Hilfsvorrichtungen umfasst, die bei einer festen Frequenz (8a) arbeiten können, und Hilfsvorrichtungen, die bei einer variablen Frequenz (8b) arbeiten können.

8. Anlage nach Anspruch 7, **dadurch gekennzeichnet, dass** die DC-Busschiene (15) mit zumindest einem zweiten Hauptzweig (13) in Verbindung mit einer entsprechenden Hilfsvorrichtung (8a) variabler Frequenz der Hauptanlage (3) verbunden ist, und entlang dem ein zweiter DC-AC-Wandler (19) angeordnet ist.

9. Anlage nach Anspruch 8, **dadurch gekennzeichnet, dass** die Schaltung (5) zumindest einen zweiten statischen Hauptschalter (20) umfasst, der entlang des entsprechenden zweiten Hauptzweiges (13) zwischen dem zweiten DC-AC-Wandler und der DC-Busschiene (15) angeordnet ist.

10. Anlage nach einem der Ansprüche 4 bis 9, **dadurch gekennzeichnet, dass** die DC-Busschiene (15) mit zumindest einem zweiten komplementären Zweig (14) in Verbindung mit der komplementären Anlage (4) verbunden ist, entlang dem ein zweiter AC-DC-Wandler (22) angeordnet ist.

11. Anlage nach Anspruch 10, **dadurch gekennzeichnet, dass** die Schaltung (5) zumindest einen zweiten komplementären statischen Schalter (23) umfasst, der entlang des entsprechenden zweiten komplementären Zweiges (13) zwischen dem zweiten AC-DC-Wandler (22) und der DC-Busschiene (15) angeordnet ist.

12. Anlage nach einem der Ansprüche 7 bis 11, **dadurch gekennzeichnet, dass** die Schaltung (5) eine AC-Busschiene (25) entlang des ersten Hauptzweiges (12) umfasst, die zwischen dem DC-AC-Wandler (16) und dem elektrischen Verteilungsnetz (2) angeordnet ist.

13. Anlage nach Anspruch 12, **dadurch gekennzeichnet, dass** die AC-Busschiene (25) mit zumindest einer jeweiligen Hilfsvorrichtung bei einer festen Frequenz (8b) verbunden ist.

14. Anlage nach Anspruch 12 oder 13, **dadurch gekennzeichnet, dass** die AC-Busschiene (25) mit zumindest einer Hilfsvorrichtung (8b) variabler Frequenz verbunden ist, die mit der DC-Busschiene (15) verbunden ist.

15. Verfahren zum Steuern einer Anlage (1) für die Erzeugung von elektrischer Energie, wobei das Verfahren folgende Schritte umfasst:
- Erzeugen von primärer elektrischer Energie (E_{P}) bei einer ersten Frequenz (f₁) für ein elektrisches Verteilungsnetz (2), das mit der Anlage (1) verbunden ist;
- Erzeugen von komplementärer elektrischer Energie (E_{C}) bei einer zweiten variablen Frequenz (f₂);
- Erfassen einer Netzfrequenz (f_{R}) des elektrischen Verteilungsnetzes (2);
- Umwandeln der komplementären elektrischen Energie (E_{C}) bei der zweiten Frequenz (f₂) in komplementäre elektrische Energie (E_{C}) bei der ersten Frequenz (f₁);
- Zuführen eines kontrollierten Anteils an komplementärer elektrischer Energie (E_{C}) bei der ersten Frequenz (f₁) an das elektrische Verteilungsnetz (2), wenn sich die Netzfrequenz (f_{R}) von einer Nennfrequenz (f_{N}) unterscheidet; wobei der Schritt des Zuführens eines kontrollierten Anteils an komplementärer elektrischer Energie (E_{C}) den Schritt des Bestimmens des kontrollierten Anteils an komplementärer elektrischer Energie (E_{C}) auf der Basis des Unterschieds der Netzfrequenz (f_{R}) und der Nennfrequenz (f_{N}) umfasst;
wobei das Verfahren **dadurch gekennzeichnet ist, dass**:
- der Schritt des Erzeugens von primärer elektrischer Energie (E_{P}) das Konstanthalten der primären elektrischen Energie (E_{P}) in einem ersten Betriebsmodus und das Variieren der primären elektrischen Energie (E_{P}) in einem zweiten Betriebsmodus umfasst; der Schritt des Variierens der primären elektrischen Energie (E_{P}) den Schritt des Variierens der primären elektrischen Energie (E_{P}) zwischen einem voreingestellten Minimalwert und einem voreingestellten Maximalwert entsprechend der Differenz zwischen der Netzfrequenz (f_{R}) und der Nennfrequenz (f_{N}) umfasst;
- der Schritt des Zuführens eines kontrollierten Anteils an komplementärer elektrischer Energie (E_{C}) umfasst:
• Zuführen eines Nennanteils an komplementärer elektrischer Energie (E_{C}), wenn sich die primäre elektrische Energie (E_{P}) in einem voreingestellten Bereich befindet, der durch einen ersten Grenzwert, der niedriger ist als der maximale voreingestellte Wert, und durch einen zweiten Grenzwert, der höher ist als der minimale voreingestellte Wert, festgelegt ist;
• Vergrößern des Anteils an komplementärer elektrischer Energie (E_{E}) in Bezug auf den Nennanteil an komplementärer elektrischer Energie (E_{C}), wenn die primäre elektrische Energie (E_{P}) gleich oder höher als der erste Grenzwert ist und wenn die Netzfrequenz (f_{R}) niedriger als die Nennfrequenz (f_{N}) ist; und
• Verkleinern des Anteils an komplementärer elektrischer Energie (E_{C}) in Bezug auf den Nennanteil an komplementärer elektrischer Energie, wenn die primäre elektrische Energie (E_{P}) gleich oder niedriger als der zweite Grenzwert ist und wenn die Netzfrequenz (f_{R}) höher als die Nennfrequenz (f_{N}) ist.

16. Verfahren nach Anspruch 1, **dadurch gekennzeichnet, dass** die Verbrennungskraftmaschineneinheit (10) mit Biodiesel-Treibstoff versorgt wird.

## Revendications

1. Centrale pour la production d'énergie électrique comprenant:
- une centrale principale (3) comprenant au moins une unité de génération principale (7) pour produire une énergie électrique primaire (E_{P}) à une première fréquence (f₁) pour un réseau de distribution électrique (2) relié à la centrale (1) ; et
- une centrale complémentaire (4), comprenant au moins une unité (9) à moteur à combustion interne pour produire une énergie électrique complémentaire (E_{C}) à une deuxième fréquence variable (f₂) ;
- un circuit (5) relié à la centrale complémentaire (4), pour convertir l'énergie électrique complémentaire (E_{C}) à la deuxième fréquence (f₂) en une énergie électrique complémentaire (E_{C}) à la première fréquence (f₁) et alimenter l'énergie électrique complémentaire (E_{C}) au réseau de distribution électrique (2) par l'énergie électrique complémentaire (E_{C}) à la première fréquence (f₁) ;
la centrale étant **caractérisée par** le fait de comprendre un dispositif de commande (6) configuré pour:
- maintenir l'énergie électrique primaire (E_{P}) constante dans un premier mode de fonctionnement et faire varier l'énergie électrique primaire (E_{P}) dans un deuxième mode de fonctionnement entre une valeur minimale préréglée et une valeur maximale préréglée selon la différence entre la fréquence du réseau (f_{R}) et une fréquence nominale du réseau (f_{N}) ;
- alimenter le réseau de distribution électrique (2) par une fraction commandée de l'énergie électrique complémentaire (E_{C}) à la première fréquence (f₁), si la fréquence du réseau (f_{R}) est différente de la fréquence nominale (f_{N}) ; la fraction commandée de l'énergie électrique complémentaire (E_{C}) étant déterminée sur la base de la différence entre la fréquence du réseau (f_{R}) et la fréquence nominale (f_{N}) ; dans laquelle le fait d'alimenter par une fraction commandée de l'énergie électrique complémentaire (E_{C}) comprend le fait :
. d'alimenter par une fraction nominale de l'énergie électrique complémentaire (E_{C}) si l'énergie électrique primaire (E_{P}) est comprise dans une plage préréglée définie par une première limite inférieure à la valeur maximale préréglée, et par une deuxième limite supérieure à la valeur minimale préréglée ;
. d'augmenter la fraction de l'énergie électrique complémentaire (E_{C}) par rapport à la fraction nominale de l'énergie électrique complémentaires (E_{C}), si l'énergie électrique primaire (E_{P}) est supérieure ou égale à la première limite et si la fréquence du réseau (f_{R}) est inférieure à la fréquence nominale (f_{N}) ; et
. de réduire la fraction de l'énergie électrique complémentaire (E_{C}) par rapport à la fraction nominale de l'énergie électrique complémentaires (E_{C}), si l'énergie électrique primaire (E_{P}) est inférieure ou égale à la deuxième limite et si la fréquence du réseau (f_{R}) est supérieure à la fréquence nominale (f_{N}).

2. Centrale selon la revendication 1, **caractérisée en ce que** la centrale principale (3) comprend une pluralité de dispositifs auxiliaires (8a ; 8b) pour aider à la production d'énergie électrique primaire (E_{P}) à la première fréquence (f₁) ; le circuit (5) étant relié à au moins l'un des dispositifs auxiliaires (8) de la centrale principale (3).

3. Centrale selon soit la revendication 1 soit la revendication 2, **caractérisée en ce que** le circuit (5) comprend une partie à courant continu (11), dite partie DC.

4. Centrale selon la revendication 3, **caractérisée en ce que** la partie DC (11) comprend une barre omnibus DC (15), qui est reliée à au moins une première branche principale (12) en communication avec le réseau de distribution électrique (2) et le long de laquelle est placé un premier convertisseur (16) courant continu/alternatif, dit DC/AC, et à au moins une première branche complémentaire (14) en communication avec la centrale complémentaire (4) et le long de laquelle est placé un premier convertisseur (22) courant alternatif/continu, dit AC/DC.

5. Centrale selon la revendication 4, **caractérisée en ce que** le circuit (5) comprend un premier commutateur statique principal (17) placé le long de la première branche principale (12) entre le premier convertisseur DC/AC (16) et la barre omnibus DC (15).

6. Centrale selon la revendication 4 ou la revendication 5, **caractérisée en ce que** le circuit (5) comprend un premier commutateur statique complémentaire (23) placé le long de la première branche complémentaire (14) entre le premier convertisseur AC/DC (22) et la barre omnibus DC (15).

7. Centrale selon l'une quelconque des revendications 2 à 6, **caractérisée en ce que** la pluralité des dispositifs auxiliaires (8a ; 8b) comprend des dispositifs auxiliaires qui peuvent fonctionner à une fréquence fixe (8a) et des dispositifs auxiliaires qui peuvent fonctionner à une fréquence variable (8b).

8. Centrale selon la revendication 7, **caractérisée en ce que** la barre omnibus DC (15) est reliée à au moins une deuxième branche principale (13) en communication avec un dispositif auxiliaire à fréquence variable respective (8a) de la centrale principale (3) et le long de laquelle est placé un deuxième convertisseur DC/AC (19).

9. Centrale selon la revendication 8, **caractérisée en ce que** le circuit (5) comprend au moins un deuxième commutateur statique principal (20) placé le long de la deuxième branche principale respective (13) entre le deuxième convertisseur DC/AC et la barre omnibus DC (15).

10. Centrale selon l'une quelconque des revendications 4 à 9, **caractérisée en ce que** la barre omnibus DC (15) est reliée à au moins une deuxième branche complémentaire (14) en communication avec la centrale complémentaire (4) et le long de laquelle est placé un deuxième convertisseur AC/DC (22).

11. Centrale selon la revendication 10, **caractérisée en ce que** le circuit (5) comprend au moins un deuxième commutateur statique complémentaire (23) placé le long de la deuxième branche complémentaire respective (13) entre le deuxième convertisseur AC/DC (22) et la barre omnibus DC (15).

12. Centrale selon l'une quelconque des revendications 7 à 11, **caractérisée en ce que** le circuit (5) comprend une barre omnibus AC (25) le long de la première branche principale (12), qui est placée entre le convertisseur DC/AC (16) et le réseau de distribution électrique (2).

13. Centrale selon la revendication 12, **caractérisée en ce que** la barre omnibus AC (25) est reliée à au moins un dispositif auxiliaire respectif à une fréquence fixe (8b).

14. Centrale selon la revendication 12 ou la revendication 13, **caractérisée en ce que** la barre omnibus AC (25) est reliée à au moins un dispositif auxiliaire à fréquence variable (8b) reliée à la barre omnibus DC (15).

15. Procédé destiné à commander une centrale (1) pour la production d'énergie électrique ;
le procédé comprenant les étapes qui consistent:
- à produire une énergie électrique primaire (E_{P}) à une première fréquence (f₁) pour un réseau de distribution électrique (2) relié à la centrale (1) ;
- à produire une énergie électrique complémentaire (E_{C}) à une deuxième fréquence variable (f₂) ;
- à détecter une fréquence du réseau (f_{R}) du réseau de distribution électrique (2);
- à convertir l'énergie électrique complémentaire (E_{C}) à la deuxième fréquence (f₂) en une énergie électrique complémentaire (E_{C}) à la première fréquence (f₁) ;
- à alimenter le réseau de distribution électrique (2) par une fraction commandée de l'énergie électrique complémentaire (E_{C}) à la première fréquence (f₁), si la fréquence du réseau (f_{R}) est différente de la fréquence nominale (f_{N}) ;
l'étape qui consiste à alimenter une fraction commandée de l'énergie électrique complémentaire (E_{C}) comprend l'étape qui consiste à déterminer la fraction commandée de l'énergie électrique complémentaire (E_{C}) sur la base de la différence entre la fréquence du réseau (f_{R}) et la fréquence nominale (f_{N}) ;
le procédé étant **caractérisé en ce que**:
- l'étape qui consiste à produire une énergie électrique primaire (E_{P}) comprend le fait de maintenir l'énergie électrique primaire (E_{P}) constante dans un premier mode de fonctionnement et le fait de faire varier l'énergie électrique primaire (E_{P}) dans un deuxième mode de fonctionnement ; l'étape qui consiste à faire varier l'énergie électrique primaire (E_{P}) comprend l'étape qui consiste à faire varier l'énergie électrique primaire (E_{P}) entre une valeur minimale préréglée et une valeur maximale préréglée selon la différence entre la fréquence du réseau (f_{R}) et la fréquence nominale (f_{N}) ;
- l'étape qui consiste à alimenter une fraction commandée de l'énergie électrique complémentaire (E_{C}) comprend le fait:
• d'alimenter une fraction nominale de l'énergie électrique complémentaire (E_{C}) si l'énergie électrique primaire (E_{P}) est comprise dans une plage préréglée définie par une première limite inférieure à la valeur maximale préréglée, et par une deuxième limite supérieure à la valeur minimale préréglée ;
• d'augmenter la fraction de l'énergie électrique complémentaire (E_{C}) par rapport à la fraction nominale de l'énergie électrique complémentaire (E_{C}), si l'énergie électrique primaire (E_{P}) est supérieure ou égale à la première limite et si la fréquence du réseau (f_{R}) est inférieure à la fréquence nominale (f_{N}) ; et
• de réduire la fraction de l'énergie électrique complémentaire (E_{C}) par rapport à la fraction nominale de l'énergie électrique complémentaire (E_{C}), si l'énergie électrique primaire (E_{P}) est inférieure ou égale à la deuxième limite et si la fréquence du réseau (f_{R}) est supérieure à la fréquence nominale (f_{N}).

16. Procédé selon la revendication 1, dans lequel l'unité (10) à moteur à combustion interne est alimentée par un combustible biodiesel.
